# EUROPEAN PATENT APPLICATION

(11) **EP 4 613 623 A1**
(43) Date of publication of application: **10.09.2025**
(21) Application number: 25161181.0
(22) Date of filing: 03.03.2025
(51) Int. Cl.: B62M 6/65, B62M 6/80, B62M 6/45, B62J 45/00, B62J 11/19, B62K 25/02, H02K 5/22

(54) **HUB MOTOR WIRE OUTLET STRUCTURE**

(30) Priority: 06.03.2024 TW 113108111
(71) Applicant: Yao, Li-Ho, Taipei City 106 (TW)
(72) Inventor: Yao, Li-Ho, 106 Taipei City (TW); HSIEH, Pei-Sheng, 106 Taipei City (TW); TIEN, Chi-Chen, 106 Taipei City (TW)
(74) Representative: Horak, Michael

(57) **Abstract**

A hub motor wire outlet structure includes a hub motor (60) and a wire outlet assembly (10). The wire outlet assembly (10) includes a motor connector (20) and a wire connector (30), and a load-side circuit board (25) of the motor connector (20) and a power-side circuit board (36) of the wire connector (30) are interconnectable through a plurality of terminal pin connecting pillars (24) so as to form a modularized structure. As such, the firmness and alignment accuracy of the assembly can be effectively improved, making it easy to assemble during mounting, enhance operation safety, and also reduce the area occupied by the entire wire assembly.

## Description

### TECHNICAL FIELD

The present invention relates to the technical field of hubs of electric vehicles, and more particularly to a modularized hub motor wire outlet structure, by which firmness and alignment accuracy of assembly can be improved and the waterproof and dustproof effect can be enhanced to thereby effectively improve the operation safety thereof.

### THE PRIOR ART

Electrically-assisted bicycles that use hub motors to assist the driving force generated by human power are now widely used. Since the signal lines used for control and the power lines used for power supply in the hub motors need to be connected to the electric machine located inside the hub motor from the control system and the power system on the vehicle frame located on the outside, the common practice is to arrange the wire assembly of the signal line and the power line to individually extend through the hub axle to connect to the power line and the signal line in series with the electric machine. Therefore, in the arrangement operation of the wire assembly, it is not only difficult to assemble, but also has poor fixation and inaccurate alignment. Moreover, it is impossible to effectively perform waterproof and dustproof operations. Moreover, after the overall installation, the signal line and the power line need to be connected one by one. Considering the assembly operation space and convenience, the area occupied by the entire wire assembly is increased, and even causes the problem of easy damage and short service life, and this seriously affects the safety of subsequent riding of the electrically-assisted bicycle.

In other words, the existing wire assembly structure design for hub motors is not perfect, resulting in the difficulty of wire outgoing assembly operation, large space and insufficient safety. How to solve the above problems is what the present invention intends to explore.

### SUMMARY OF THE INVENTION

One of the primary objectives of the present invention is to make wire outlet connection in a modularized structure so as to improve firmness and alignment accuracy of the assembly to thereby ease assembling during mounting.

Another one of the primary objectives of the present invention is to effectively enhance the waterproof and dustproof effect so as to effectively improve the operation safety to thereby extend the service life.

A further one of the primary objectives of the present invention is to reduce the area occupied by a wire assembly so as to enhance convenience of assembling operation and also to reduce the weight of the entire electrically-assisted bicycle.

### BRIEF DESCRIPTION OF THE DRAWINGS

FIG. 1 is a perspective view of the present invention.
FIG. 2 is a perspective view of the present invention taken from a different view angle.
FIG. 3 is a n exploded view of the present invention.
FIG. 4 is an exploded view of the present invention taken from a different view angle.
FIG. 5 is a schematic view showing the present invention used in an electrically-assisted bicycle.
FIG. 6 is a cross-sectional view showing the present invention used in an electrically-assisted bicycle.

### DETAILED DESCRIPTION OF THE PREFERRED EMBODIMENT

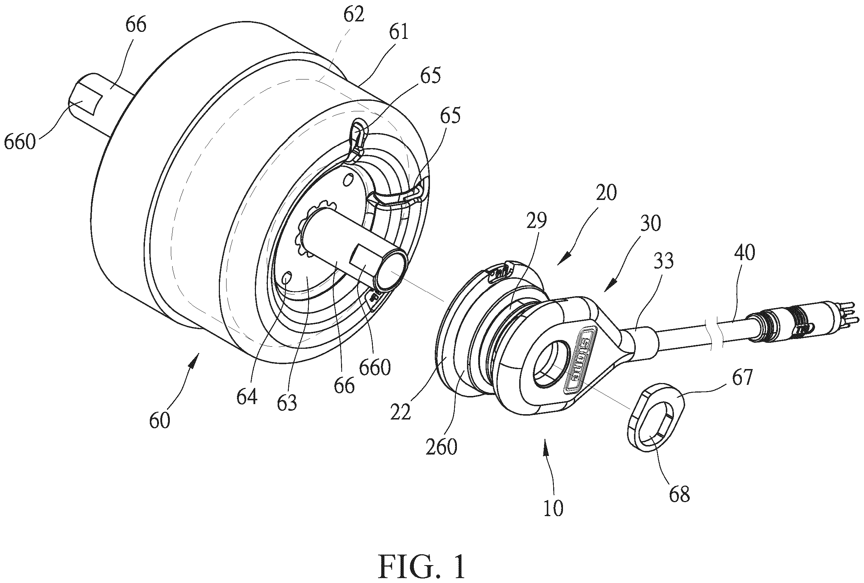

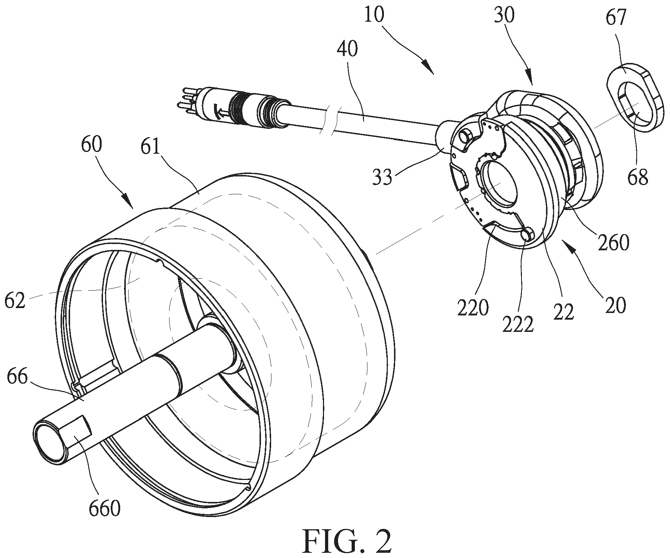

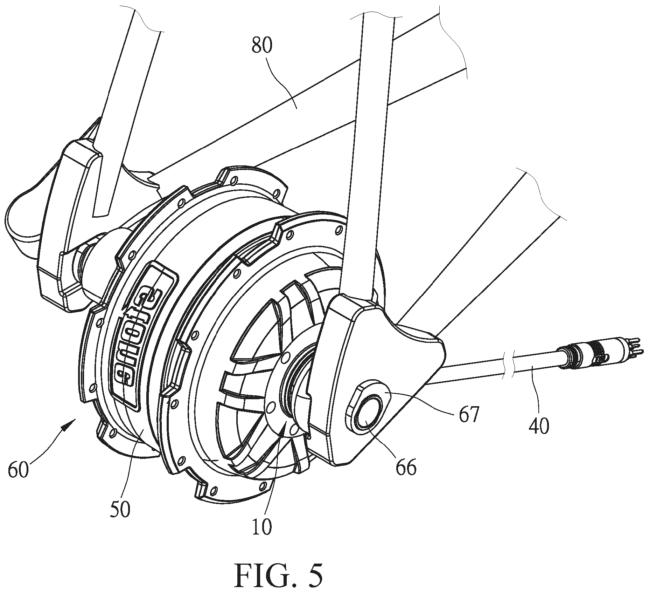

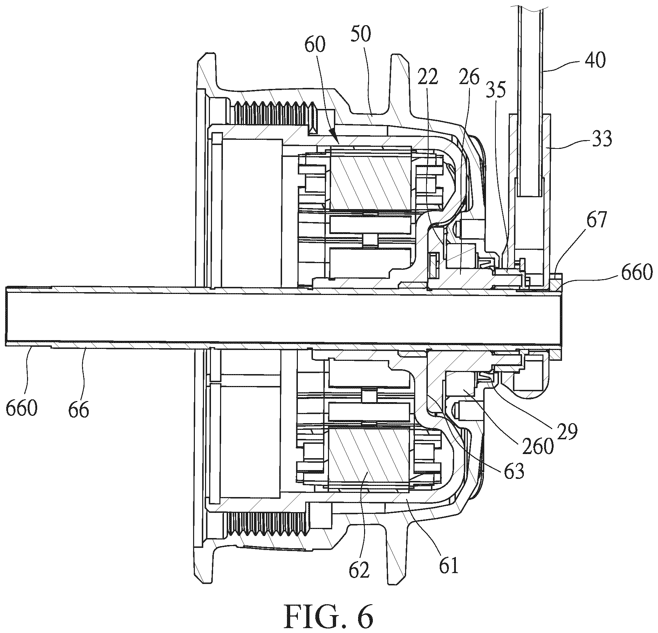

The present invention is applicable to driving of an electrically assisted bicycle or an electric vehicle, and, as shown in FIGS. 1, 2, and 5, comprises a hub motor 60 mounted on a vehicle frame 80 of the electrically assisted bicycle or the electric vehicle and a wire outlet assembly 10, wherein the hub motor 60 includes, arranged at a center thereof, a hub axle 66, and the hub motor 60 includes an internal cap 61 that is in the form of a cup or bowl. The internal cap 61 includes a motor assembly 62 arranged in an interior thereof to generate an acting force for driving a hub housing 50 (see FIGS. 5 and 6) to rotate relative to the hub axle 66. The internal cap 61 is provided with a mounting trough 63 formed in an outside of a closed end thereof and concentrical with the hub axle 66, and the mounting trough 63 includes at least one first positioning portion 64. The first positioning portion 64 can be in the form of a hole or in the form of a peg, and in the present invention, the first positioning portion 64 is made in the form of two holes as a primary embodiment for mounting and positioning the wire outlet assembly 10. Further, the internal cap 61 includes at least one wire outgoing aperture 65 for at least one wire of the motor assembly 62 of the hub motor 60 to extend out therethrough, wherein the wire can be a signal line for control purposes or a power line for power supply purposes. Two ends of the hub axle 66 are each formed with at least one first constraining portion 660 for fixing with a fastening plate 67 having a second constraining hole 68 in mounting the hub motor 60 to the vehicle frame 80 through the hub axle 66.

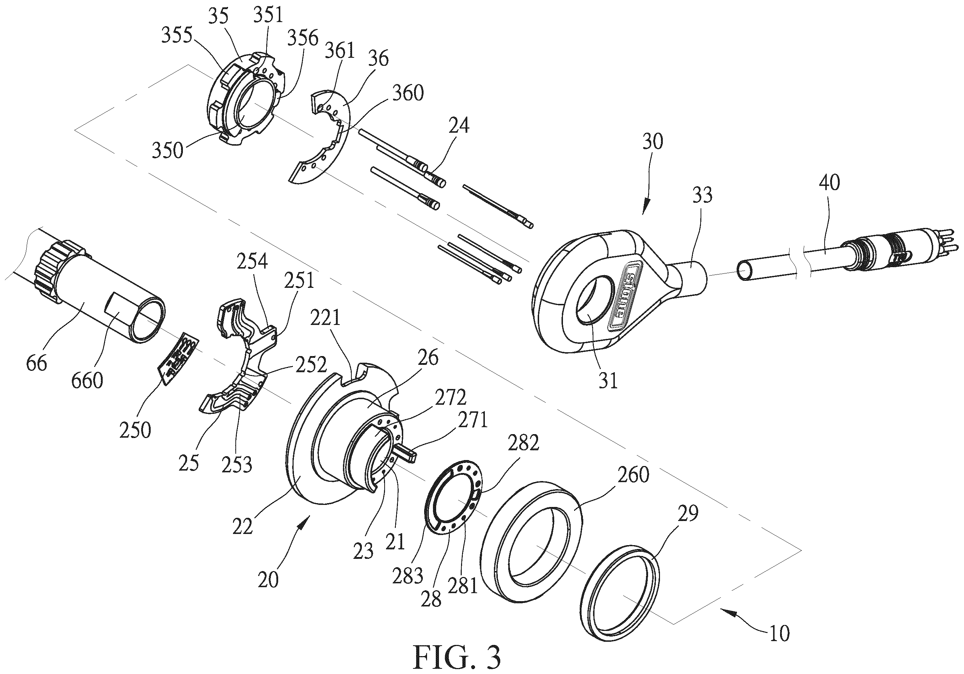

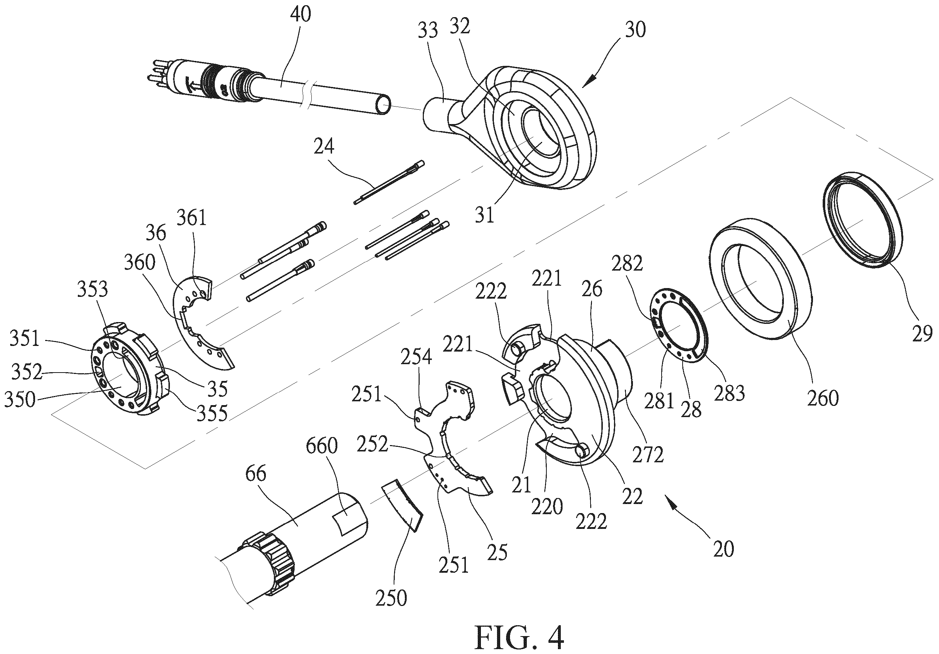

The wire outlet assembly 10 comprises a motor connector 20 and a wire connector 30. Structural details of the wire outlet assembly 10 are as shown in FIGS. 3, 4, and 5, wherein the motor connector 20 is formed, in a center thereof, with an axle hole 21 corresponding to the hub axle 66. Further, the motor connector 20 is provided, on one side thereof facing the internal cap 61, with a contact and support plate 22, and the contact and support plate 22 is formed, in a surface thereof facing the internal cap 61, with a mounting recess 220 for receiving and mounting a load-side circuit board 25 having a shape corresponding thereto. The contact and support plate 22 is further formed, in the surface thereof facing the internal cap 61, with a plurality of positioning notches 221 in communication with the mounting recess 220, and the positioning notches 221 corresponding to the wire outgoing aperture 65 of the internal cap 61. Further, the motor connector 20 is provided, in a circumferential edge thereof adjacent to the axle hole 21, with a plurality of terminal pin orifices 23 penetrating two ends thereof. The terminal pin orifices 23 respectively receive a plurality of terminal pin connecting pillars 24 to insert therein, wherein the terminal pin orifices 23 and the terminal pin connecting pillars 24 can be of different diameter sizes for transmission of signals or electrical power. The load-side circuit board 25 includes positioning extension tabs 254 respectively corresponding to the positioning notches 221 of the mounting recess 220 in order to have the load-side circuit board 25 correctly aligned with and positioned in the mounting recess 220 of the motor connector 20. The contact and support plate 22 of the motor connector 20 is provided, on the surface thereof, with a second positioning portion 222 corresponding to the first positioning portion 64 of the internal cap 61, and the second positioning portion 222 can be in the form of a peg or in the form of a hole corresponding to the first positioning portion 64, and in the present invention, the second positioning portion 222 is made in the form of two pegs as a primary embodiment, in order to allow the motor connector 20 to be correctly positioned in the mounting trough 63 of the internal cap 61. Further, the internal cap 61 is provided with at least one control circuit board 250. The load-side circuit board 25 is printed with a plurality of load connecting points 251 for connection with wires of the motor assembly 62 or the control circuit board 250 and a plurality of terminal pin connecting points 252 corresponding to the terminal pin orifices 23, with a conductive connecting line 253 formed between each of the load connecting points 251 and the terminal pin connecting point 252. Further, a bearing seat 26 extends from one end of the motor connector 20 opposite to the internal cap 61 for mounting a bearing 260, so that the bearing 260 is used to support the hub housing 50 outside of the hub motor 60 (see FIG. 6) to allow the hub housing 50 to freely rotate relative to the motor connector 20. Further, an end surface of the bearing seat 26 of the motor connector 20 is provided with a guide bar 271 and a positioning arc plate 272 for correct alignment of the wire connector 30. A waterproof ring gasket 28 is interposed and arranged between the bearing seat 26 and the wire connector 30, and the waterproof ring gasket 28 is provided with a plurality of terminal pin orifices 281, a guide hole 282, and a positioning arc slot 283 respectively corresponding to the terminal pin orifices 23, the guide bar 271, and the positioning arc plate 272 of the motor connector 20. Further, a dust protection ring 29 is interposed between the bearing 260 of the bearing seat 26 of the motor connector 20 and the hub housing 50 for protection against water and dust.

The wire connector 30 is formed, in a center thereof, with an axle hole 31 corresponding to the hub axle 66. One side of the wire connector 30 corresponding to the motor connector 20 is formed with an assembly trough 32 for enclosing a terminal pin base 35 through injection molding. The wire connector 30 includes a connecting portion 33 for connecting with a wire harness 40. Further, the terminal pin base 35 is formed, in a center thereof, with an axle hole 350 corresponding to the hub axle 66. The terminal pin base 35 includes a plurality of terminal pin orifices 351, a guide hole 352, and a positioning arc slot 353 formed therein and respectively corresponding to the terminal pin orifices 23, the guide bar 271, and the positioning arc plate 272 of the motor connector 20, so that the wire connector 30 may be accurately connected with the motor connector 20 by means of the terminal pin base 35. Further, the terminal pin base 35 is formed, on a circumferential edge thereof, with at least one tooth 355. One side of the terminal pin base 35 corresponding to the wire connector 30 includes a first fitting engagement portion 356 for mounting a power-side circuit board 36. The power-side circuit board 36 includes a second fitting engagement portion 360 corresponding to the first fitting engagement portion 356 of the terminal pin base 35, so that the power-side circuit board 36 can be accurately positioned. The power-side circuit board 36 is formed with a plurality of terminal pin orifices 361 corresponding to the terminal pin orifices 351 of the terminal pin base 35 to receive the terminal pin connecting pillars 24 to insert and penetrate therethrough. Ends of the terminal pin connecting pillars 24 are connected with the signal lines or power lines contained in the wire harness 40.

As such, a hub motor wire outlet structure that is modularized and is easy to assemble is formed.

As to an actual operation of the present invention, referring to FIGS. 1-6, the power-side circuit board 36 is assembled and mounted on the terminal pin base 35, and the terminal pin connecting pillars 24 that are connected with the wire harness 40 are inserted, one by one, into the power-side circuit board 36 and the terminal pin base 35. The terminal pin base 35 is then placed in a mold of the wire connector 30 and the injection molding technology is applied to enclose and form the wire connector 30 in which the terminal pin connecting pillars 24 are included.

Further, the load-side circuit board 25 is assembled and mounted on the motor connector 20, and the bearing 260 and the dust protection ring 29 are mounted on the bearing seat 26 of the motor connector 20. Then, the terminal pin connecting pillars 24 of the wire connector 30 are respectively penetrated through the waterproof ring gasket 28 and the motor connector 20, and opposite ends of the terminal pin connecting pillars 24 are connected to the terminal pin connecting points 252 of the load-side circuit board 25 corresponding thereto so as to have the motor connector 20 assembled and mounted in the mounting trough 63 of the internal cap 61, and the signal lines and the power lines of the motor assembly 62 received in the internal cap 61 are connected through the control circuit board 250 to the load connecting point 251 of the load-side circuit board 25 corresponding thereto. Finally, as shown in FIGS. 5 and 6, the hub housing 50 is mounted outside the hub motor 60, and stays on two side of the vehicle frame 80 are mounted to the hub axle 66 of the hub motor 60, so that the wire outlet assembly 10 can be accurately and quickly assembled and mounted to the hub motor 60 in a modularized structure.

Through the above-mentioned design and description, the present invention can use the plurality of terminal pin connecting pillars 24 to connect the load-side circuit board 25 of the motor connector 20 and the power-side circuit board 36 of the wire connector 30 in the wire outlet assembly 10 to form a modularized structure. This can effectively improve the firmness and alignment accuracy of the assembly, making it easy to assemble during mounting, and can also effectively improve the waterproof and dustproof effect thereof so as to effectively enhance its safety in use and further extend its service life. At the same time, the area occupied by the entire wire assembly can be reduced to further enhance the convenience of assembly operation, and also reduce the weight of the entire electrically-assisted bicycle.

## Claims

1. A hub motor wire outlet structure, which is applicable to a vehicle frame (80) of an electrically assisted bicycle, the hub motor wire outlet structure comprising:
a hub motor (60), which comprises a hub axle (66) arranged on a center thereof, the hub motor (60) comprising an internal cap (61) through which a motor assembly (62) is arranged on the hub axle (66) to generate an acting force for driving a hub housing (50) to rotate relative to the hub axle (66), the internal cap (61) having a closed end that is formed, in an outside thereof, with a mounting trough (63) concentrical with the hub axle (66), the mounting trough (63) comprising at least one first positioning portion (64), the internal cap (61) comprising at least one wire outgoing aperture (65) for at least one wire of the motor assembly (62) of the hub motor (60) to extend out therethrough; and
a wire outlet assembly (10), which extends through the hub axle (66) and is arranged in the mounting trough (63) of the internal cap (61), the wire outlet assembly (10) comprising a motor connector (20) and a wire connector (30);
wherein the motor connector (20) comprises an axle hole (21) formed in a center thereof and corresponding to the hub axle (66), the motor connector (20) comprising a contact and support plate (22) arranged on one side thereof corresponding to the internal cap (61), the contact and support plate (22) being formed with a mounting recess (220) in a surface thereof facing the internal cap (61) for receiving and mounting a load-side circuit board (25) having a shape corresponding thereto, the motor connector (20) being provided, in a circumferential edge thereof adjacent to the axle hole(21), with a plurality of terminal pin orifices (23) penetrating two ends thereof, the terminal pin orifices (23) respectively receiving a plurality of terminal pin connecting pillars (24) to insert therein, the contact and support plate (22) of the motor connector (20) comprising a second positioning portion (222) arranged on a surface thereof and corresponding to the first positioning portion (64), the load-side circuit board (25) being printed with a plurality of load connecting points (251) connected with the wire of the motor assembly (62) and a plurality of terminal pin connecting points (252) corresponding to the terminal pin orifices (23), a conductive connecting line (253) being formed between each of the load connecting points (251) and a corresponding one of the terminal pin connecting points (252), a guide bar (271) and a positioning arc plate (272) being arranged on an end surface of the motor connector (20) for correct alignment of the wire connector (30); and
the wire connector (30) comprises an axle hole (31) formed in a center thereof and corresponding to the hub axle (66), the wire connector (30) comprising an assembly trough (32) formed in one side thereof corresponding to the motor connector (20) for receiving and mounting a terminal pin base (35), the wire connector (30) comprising a connecting portion (33) connected to a wire harness (40), the terminal pin base (35) comprising an axle hole (350) formed in a center thereof and corresponding to the hub axle (66), the terminal pin base (35) comprising a plurality of terminal pin orifices (351), a guide hole (352), and a positioning arc slot (353) formed therein and respectively corresponding to the terminal pin orifices (23), the guide bar (271), and the positioning arc plate (272) of the motor connector (20), the terminal pin base (35) comprising a first fitting engagement portion (356) arranged on one side thereof corresponding to the wire connector (30) for mounting a power-side circuit board (36), the power-side circuit board (36) comprising a second fitting engagement portion (360) corresponding to the first fitting engagement portion (356), the power-side circuit board (36) being formed with a plurality of terminal pin orifices (361) corresponding to the terminal pin orifices (351) of the terminal pin base (35) to receive the terminal pin connecting pillars (24) to penetrate therethrough, ends of the terminal pin connecting pillars (24) being connected to the wire of the wire harness (40).

2. The hub motor wire outlet structure according to claim 1, wherein the first positioning portion (64) of the internal cap (61) is in the form of a hole, and the second positioning portion (222) of the motor connector (20) is in the form of a peg corresponding to the first positioning portion (64) so as to allow the motor connector (20) to be accurately positioned in the mounting trough (63) of the internal cap (61).

3. The hub motor wire outlet structure according to claim 1, wherein the surface of the contact and support plate (22) of the motor connector (20) is formed with a plurality of positioning notches (221) in communication with the mounting recess (220), the positioning notches (221) corresponding to the wire outgoing aperture (65) of the internal cap (61), the load-side circuit board (25) comprising positioning extension tabs (254) respectively corresponding to the positioning notches (221) of the mounting recess (220) in order to allow the load-side circuit board (25) to be accurately aligned with and positioned in the mounting recess (220) of the motor connector (20).

4. The hub motor wire outlet structure according to claim 1, wherein the internal cap (61) is provided with at least one control circuit board (250), the load-side circuit board (25) being printed with a load connecting point (251) connected with a wire of the control circuit board (250).

5. The hub motor wire outlet structure according to claim 1, wherein a bearing seat (26) extends from one end of the motor connector (20) that is opposite to the internal cap (61) for mounting a bearing (260), so that the bearing (260) supports the hub housing (50) outside of the hub motor (60).

6. The hub motor wire outlet structure according to claim 5, wherein a waterproof ring gasket (28) is interposed between the bearing seat (26) of the motor connector (20) and the wire connector (30), and the waterproof ring gasket (28) is formed with a plurality of terminal pin orifices (281), a guide hole (282), and a positioning arc slot (283) respectively corresponding to the terminal pin orifices (23), the guide bar (271), and the positioning arc plate (272) of the motor connector (20).

7. The hub motor wire outlet structure according to claim 5, wherein a dust protection ring (29) is interposed between the bearing (260) of the bearing seat (26) of the motor connector (20) and the hub housing (50) for protection against water and dust.

8. The hub motor wire outlet structure according to claim 1, wherein at least one tooth (335) is formed on a circumferential edge of the terminal pin base (35), so that the terminal pin base (35) is enclosed in the wire connector (30) through injection molding.

9. The hub motor wire outlet structure according to claim 1, wherein two ends of the hub axle (66) are each formed with at least one first constraining portion (660) for fixing with a fastening plate (67) having a second constraining hole (68) in mounting the hub motor (60) to the vehicle frame (80) through the hub axle (66).
